# EUROPEAN PATENT APPLICATION

(11) **EP 1 564 972 A1**
(43) Date of publication of application: **17.08.2005**
(21) Application number: 04003196.5
(22) Date of filing: 12.02.2004
(51) Int. Cl.: H04M 1/725

(54) **Mobile terminal with accessory file download possibility**

(71) Applicant: Sony Ericsson Mobile Communications AB, 221 88 Lund (SE)
(72) Inventor: Taneda, Morio, 81669 München (DE)
(74) Representative: Körber, Martin, Dipl.-Phys.

(57) **Abstract**

The present invention provides a mobile terminal for wireless communication comprising a connecting means (3) for connecting an external accessory (2) to the mobile terminal (1), a control means (4) for detecting the accessory (2) connected via the connecting means (3), a processing unit (6) for checking if the necessary file for supporting the connected accessory (2) is implemented in the mobile terminal and a managing means (9) for downloading a file from an external server (10) in case that the necessary file for supporting the accessory (2) is not implemented in the mobile terminal (1).

The invention further relates to a method for controlling a mobile terminal for wireless communication.

## Description

The invention relates to a mobile terminal for wireless communication according to claim 1 and to a method for controlling a mobile terminal for wireless communication according to claim 8.

In mobile terminals for providing the possibility to connect an accessory to the mobile terminal the respective parameters in the software of the mobile terminal have to be set properly in order to support the connected accessory.
Conventional mobile terminals have the whole pertinent behaviour including parameters mapping from accessories to parameters and logic for identification and activation of accessories encoded in the mobile terminal software. Hereby, a small number of sets of parameters or combinations thereof are defined, which are implemented in the mobile terminal software. Accessories may request a certain set or combination.
In another solution for each configuration regarding the mobile terminal or the accessory, the accessory would provide the parameters to the mobile terminal. However, the set of parameters is specific to both the mobile terminal and accessory, making it infeasible for the accessory to provide the parameters to the mobile terminal. Furthermore, accessories may be conceived which enable previously unforeseen ways of using the mobile terminal. For such accessories, merely supplying the parameter sets is not sufficient for activating any new usage scenarios. Extensions to the logic of the mobile terminal regarding its use of accessories are required.

Therefore the support of accessory connectable to a mobile terminal depends on the software implemented in the mobile terminal and is therefore limited to the files which are implemented in the mobile terminal at the time of its production and sale. As the development cycle of accessory for mobile terminals is faster than that of the mobile terminals, a possibility for the installation of new software in an already produced and sold mobile terminal is required.

It is therefore the object of the present invention to provide a mobile terminal and a method for controlling a mobile terminal for easily downloading and implementing new files which are needed for the support of accessories connected to the mobile terminal.

This object is achieved by a mobile terminal as defined in claim 1 and a method for controlling a mobile terminal as defined in claim 8.

According to the present invention a mobile terminal for wireless communication is described comprising a connecting means for connecting an external accessory to the mobile terminal, an control means for detecting the accessory connected via the connecting means, a processing unit for checking if the necessary file for supporting the connected accessory is implemented in the mobile terminal and a managing means for downloading a file from an external server in case that the necessary file for supporting the accessory is not implemented in the mobile terminal.

Further, according to the present invention a method for a mobile terminal for wireless communication is described comprising the steps of detecting if an accessory is connected to a connecting means, checking, in case that a connected accessory is detected, if the necessary file for supporting the accessory is implemented in the mobile terminal and downloading the necessary file from an external server in case that the necessary file for supporting the accessory is not implemented in the mobile terminal.

By providing a mechanism for selectively downloading files which are needed for the support of an accessory connected to the mobile terminal an adaptation of the software of the mobile terminal is possible and the functionality of the mobile terminal can be extended.

Advantageously the mobile terminal comprises a built-in file storage for storing standard implemented files.

Further, advantageously the mobile terminal comprises an expansion file storage for storing files downloaded by the managing means.

Preferably the control means supports the connected accessory.

Further, preferably an execution environment servers for executing the files stored in the expansion file storage.

The managing means can automatically download the necessary file from the server.

The managing means can download the necessary file from the server only after a download permission accorded by the user.

Embodiments of the invention will now be described, by way of example only, with reference to the accompanying drawings, in which
Fig. 1 is a block diagram showing schematically the elements a system comprising a mobile terminal according to the present invention and
Fig. 2 is a flow chart showing the steps of the process according to the present invention.

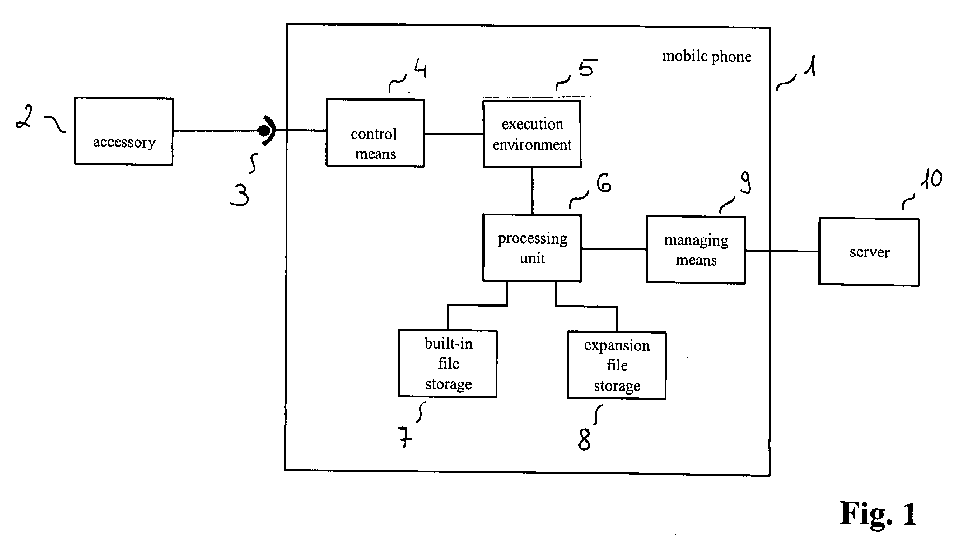

Fig. 1 shows a system comprising a mobile terminal 1 according to the present invention. The present invention hereby comprises a mobile terminal for non stationary use, such as a mobile phone, or any other portable device e.g. a portable computer, a personal digital assistant, a palmtop computer, preferably equipped with a wireless data communication means.

It is to be noted, that in the Figures only means necessary for explaining the present invention are shown and other components normally implemented in a mobile terminal like a power supply, a keypad or an antenna and a transceiver are omitted for the sake of clarity.

The mobile terminal 1 comprises a connecting means 3 for connecting various accessories 2, for instance audio accessories like head sets, external loudspeakers, car handsfree kits, earpieces, microphones or the like, cameras, displays, keypads, touchpads, a mouse, means for recognition of speech, interfaces for wireless transmission or for transmission via a cable or any other means connectable to the mobile terminal 1.
Hereby, to ensure a good quality of the accessory 2 connected to the mobile terminal 1, the accessory 2 has to be supported by the software of the mobile terminal 1, that is for example the tuning parameters for audio accessories, e.g. sensitivity, echo suppression, frequency response or volume control, have to be set properly.
As well as to ensure proper activation of the accessory 2 in usage scenarios both planned at the time of manufacture of the mobile terminal 1, and newly enabled by addition of the accessory 2, the mobile terminal 1 may require additional logic for the activation of the accessory 2, e.g. connecting sounds to loudspeakers and microphones in the accessory 2 has to be controlled depending on the type of sound e.g. phone call or music, environment settings in the phone, e.g. behaviours for quiet or noisy surroundings or during meetings, and other factors. The activation logic and settings of these tuning parameters are stored in one or more files associated to the respective accessory 2. That means, that for each accessory 2 a different file or set of files containing the tuning parameters has to be available in the mobile terminal 1 to ensure an optimal working of the accessory 2.

Therefore, a control means 4 supervises the configuration of the components of for example the audio system, such as codecs, filters, mixers or the like. That means that the control means 4, according to the tuning parameters stored in one or more files, sets the configuration of the audio system components. Further, the control means 4 detects which accessory 2 is actually connected to the connector 3 of the mobile terminal 1. The behaviour of the control means 4 is extended according to those expansion files which contain activation logic.

In a built-in file storage 7 files, programs, data or any other information are stored, that are provided on the mobile terminal from the time of production, shipping or selling. Depending on the amount of files stored in the built-in file storage 7 every accessory 2 known at the production time of the mobile terminal 1 can be supported by the file stored. In an expansion file storage 8 files, programs, data or any other information can be stored, which are loaded to the mobile terminal 1 at a later time, that is after the production, shipping and selling when the mobile terminal 1 is already in use.

Hereby, in order to facilitate the downloading, storing and executing of the files stored either in the built-in file storage 7 or in the expansion file storage 8, part of the files are configured as binary files, which are included in the mobile terminal software while the remaining binary files are loaded into the mobile terminal 1 as needed as will be explained below.

Those expansion files containing activation logic may be stored in any format executable by the mobile terminal, e.g. machine code, but using an application specific byte code format addresses various practical concerns, e.g. security, verification and linking. Therefore an execution environment 5, e.g. a byte code interpreter is implemented as a sub-program of the control means 4 to read out the files containing activation logic stored in the expansion file storage 8. If the execution environment 5 is a byte code interpreter, it is small a and limited to the actions needed for the support and control of the accessory 2. Further, if the execution environment 5 is a byte code interpreter, expansion mechanisms can be explicitly included in it, such as instructions indicating an unknown accessory or triggering the downloading of additional files.

A processing unit 6 supervises the storing, loading, submission or deletion of data or information within the mobile terminal 1.

Each accessory comprises a product identifier which is unique enough to distinguish any different version. The mobile terminal itself also carries a version identifier which distinguishes any relevant hardware and software version. These identifiers may contain information about the type, model, needed files or the like of either the mobile terminal 1 or the accessory 2.

An external server 10 provides files or the like for mobile terminals and these files can be downloaded by a mobile terminal 1 via a wireless or a wired connection under the control of a managing means 9 implemented in the mobile terminal 1. Hereby, the managing means 9 either may be a WAP client or Device Management. Device Management is an industry standard method for resending settings and files to the mobile terminal and/or updating them. Further, by Device Management application software is managed and supervised.

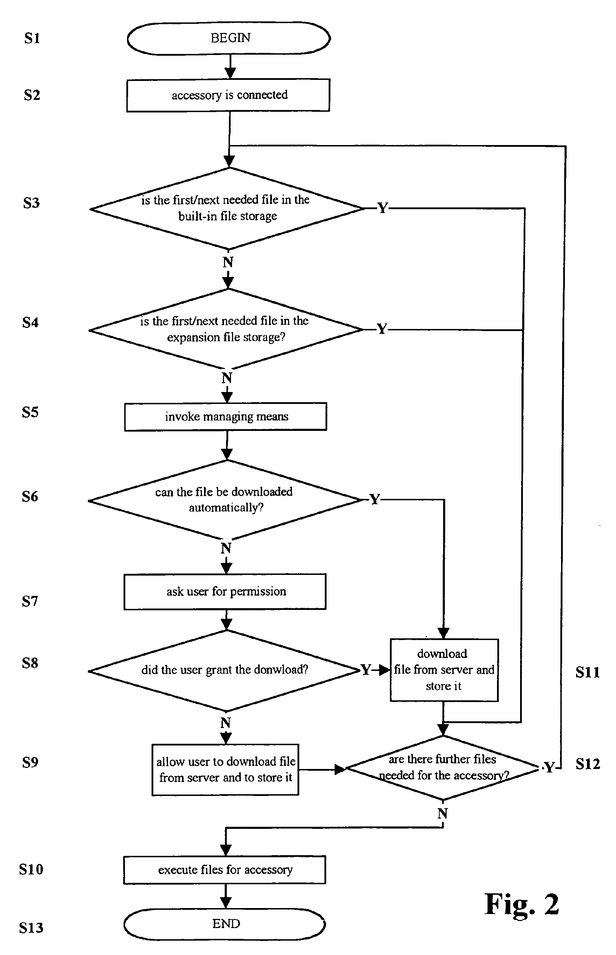

Referring to Fig. 2 now the process of detecting accessory, executing the necessary file or downloading a file from an external server 10 is explained.

In a first step S1 the process begins e.g. with switching on of the mobile terminal 1. In the next step S2 the accessory 2 is connected to the connector 3 of the mobile terminal 1. The ID of the accessory 2 is then submitted to the processing unit 6 which checks in step S3 if the first needed file for supporting the connected accessory 2 is stored in the built-in file storage 7. If this is the case, then the process goes to step S12 where the processing unit 6 depending on the information submitted by the control means 4 checks if there are further files needed for supporting the accessory 2. Otherwise, if in step S3 the first necessary file is not found in the built-in file storage 7, then the process continues with step S4 where the processing unit checks if the first needed file can be found in the expansion file storage 8. If this is the case, then the process again goes to step S12, where it is checked if there are further files needed for supporting the accessory 2. Otherwise if the first needed file cannot be found in the expansion file storage 8, then the process continues with step S5 where the managing means 9 is invoked.

Hereby, if the managing means 9 is a WAP client, then the necessary file can be downloaded from an external WAP server, which means that a connection to the server is set up either automatically or invoked by the user, the vendor web site is browsed and the file is downloaded, which will be explained in detail in the following. In the other case, that the managing means is a means for Device Management, then the needed file is added to an accessory support list so that during a Device Management session the update can be performed.

In the next step S6 the managing means 9 checks if the file can be downloaded automatically. If this is the case, then the managing means at once or later sets up a connection to the external server 10, downloads the necessary file from the server and the file then is stored by the processing unit 6 in the expansion file storage 8. Otherwise, if the file cannot be downloaded automatically, then in step S7 the user is asked for permission and in step S8 the managing means checks if the user granted the download. In case of a granted download, the process continues with step S11 and the necessary file is downloaded from the external server 10 and stored in the expansion file storage 8. If the download was not granted by the user in step S8, then in step S9 the user has the possibility to download the necessary file from the external server 10 manually. After the downloading and storing of a file either by a user in step S9 or automatically in step S11 it is checked in step S12 if there are further files needed for the support of the actually connected accessory 2. If this is the case, then the process goes back to step S3 where it is checked if the next file needed for supporting the accessory 2 is stored in the built-in file storage 7. Otherwise, if in step S12 it is found that no further files are needed, then in step S10 the respective files for supporting the accessory 2 are executed, so that the accessory 2 can be properly used. The process ends in step S13 for example with disconnecting the accessory 2 or switching off the mobile terminal.

## Claims

1. Mobile terminal for wireless communication
comprising
a connecting means (3) for connecting an external accessory (2) to the mobile terminal (1),
a control means (4) for detecting a accessory (2) connected via the connecting means (3),
a processing unit (6) for checking if the necessary file for supporting the connected accessory (2) is implemented in the mobile terminal and
a managing means (9) for downloading a file from an external server (10) in case that the necessary file for supporting the accessory (2) is not implemented in the mobile terminal (1).

2. Mobile terminal according to claim 1,
**characterised by**
a built-in file storage (7) for storing standard implemented files.

3. Mobile terminal according to claim 1 or 2,
**characterised by**
an expansion file storage (8) for storing files downloaded by the managing means (9).

4. Mobile terminal according to any of the claims 1 to 3,
**characterised by**
the control means (4) for supporting the connected accessory (2).

5. Mobile terminal according to claim 3,
**characterised by**
an execution environment (5) for executing the files stored in the expansion file storage (8).

6. Mobile terminal according to any of the claims 1 to 5,
**characterised in**
**that** the managing means (9) automatically downloads the necessary file from the server (10).

7. Mobile terminal according to any of the claims 1 to 5,
**characterised in**
**that** the managing means (9) downloads the necessary file from the server (10) only after a download permission accorded by the user.

8. Method for controlling a mobile terminal for wireless communication,
comprising the steps of
detecting if an accessory (2)is connected to a connecting means (3),
checking, in case that a connected accessory is detected, if the necessary file for supporting the accessory (2) is implemented in the mobile terminal (1) and
downloading the necessary file from an external server (10) in case that the necessary file for supporting the accessory is not implemented in the mobile terminal (1).

9. Method according to claim 8,
**characterised in**
storing standard implemented files in a built-in file storage (7).

10. Method according to claim 8 or 9,
**characterised in**
storing files downloaded by the managing means (9) in an expansion file storage (8).

11. Method according to any of the claims 8 to 10,
**characterised in**
supporting the connected accessory (2) by the control means (4).

12. Method according to claim 10,
**characterised in**
executing the files stored in the expansion file storage (8) in an execution environment (5).

13. Method according to any of the claims 8 to 12,
**characterised in**
automatically downloading the necessary file from the external server (10) by the managing means (9).

14. Method according to any of the claims 8 to 12,
**characterised in**
downloading by the managing means (9) the necessary file from the external server (10) only after a download permission accorded by the user.
